# EUROPEAN PATENT APPLICATION

(11) **EP 3 007 028 A1**
(43) Date of publication of application: **13.04.2016**
(21) Application number: 14804429.0
(22) Date of filing: 17.07.2014
(51) Int. Cl.: G06F 1/16

(54) **TWO-IN-ONE ELECTRONIC BOOK AND TABLET COMPUTER DEVICE AND METHOD THEREFOR**

(30) Priority: 31.05.2013 CN 201320313797 U
(71) Applicant: Huang, Roman, Shanghai 200335 (CN); Chiou, Harris, Shanghai 200335 (CN)
(72) Inventor: Huang, Roman, Shanghai 200335 (CN); Chiou, Harris, Shanghai 200335 (CN)
(74) Representative: Szabo, Zsolt
(86) International application number: PCT/CN2014/082403
(87) International publication number: WO 2014/190952

(57) **Abstract**

An electronic display includes two display devices respectively having therein a CPU, a display module, a display connected to the CPU via the display module, an I/O interface and a memory connected to the CPU respectively, a hinge provided between the two display device and having therein a connector module; and a communication interface adapted to be formed on the two display devices to correspond and detachably connect to the connector module of the hinge such that the two display devices are communicated to one another.

## Description

### FIELD OF THE INVENTION

The present invention relates to an electronic display and to a method as how the electronic display is connected.

### BACKGROUND OF THE INVENTION

Since the first appearance of a personal computer in the early 80s, computers have gone through dramatic changes and revolutions. People use computers in daily lives and in almost every aspect. It is said that modem people are pretty much attached or glued to computers. Without computers, people might not live their normal lives and receive information so requested. According to different requirements, there are two major computer categories: a desktop computer and a laptop computer. Again, due to its portability and light weight, a tablet personal computer (PC) is introduced to the world. A tablet PC has pretty much the same function as a laptop computer, and the primary difference may lie on the storage and operation capabilities.

Still, a different kind of electronic device somewhat like a display with a storage capability is introduced and called electronic book, or eBook, having the ability to store millions of books and display them as requested. As said, the eBook may store millions of books, people may tend to carry an eBook wherever they go so that people may use the best of their time fragments to read or study. The disadvantage of this eBook is that it can not display drawings separately, unless the drawings are embedded in the texts originally. Furthermore, the eBook is strictly limited to read whatever is stored therein and has no access to the internet. Owning to this feature, people find eBook quite dull when reading the text as there is no drawings to enrich the fun of reading.

### BRIEF SUMMARY OF THE INVENTION

An objective of the preferred embodiment of the present invention is to combine the features of a tablet PC with those of an eBook so that reading become colorful and fun.

The technical solution to fulfill the above objective is to provide an electronic display including
two display devices respectively having therein a CPU, a display module, a display connected to the CPU via the display module, an I/O interface and a memory connected to the CPU respectively;
a hinge provided between the two display device and having therein a connector module; and
a communication interface adapted to be formed on the two display devices to correspond and detachably connect to the connector module of the hinge such that the two display devices are communicated to one another.

Another objective of the present invention is that the CPU is connected to the connector module via the communication interface.

Another objective of the present invention is that the hinge has multiple first connecting pads formed thereon to correspond to the communication interface of the two display device.

Another objective of the present invention is that the communication interface include a HDMI interface, a SPI interface, a USB interface, a WiFi interface, a LAN interface, a Bluetooth interface and a NFC interface.

Another objective of the present invention is that one of the display devices adopts an eBook with an e-paper or a liquid crystal display, the other display device adopts a tablet computer with a liquid crystal display.

Another objective of the present invention is that a touch screen connected to the CPU.

Another objective of the present invention is that a VOIP is provided to both of the display devices to connect to respect CPU of the two display devices.

Another objective of the present invention is that a camera is connected to the CPU of each of the two display devices.

Another objective of the present invention is that the communication interface has multiple connecting pads to correspond to the first connecting pads of the hinge to allow the hinge to electrically connect to the communication interface.

Another objective of the present invention is that a method of combining an eBook and a tablet computer, the method comprising the steps of:
providing a communication interface on a side of the tablet computer and the eBook; and
providing a hinge with first connecting pads configured to correspond to the communication interfaces of the tablet computer and the eBook to allow the tablet computer and the eBook to be detachably connected.

Another objective of the present invention is that each of the tablet computer and the eBook respectively have therein a CPU, a display module, a display connected to the CPU via the display module, an I/O interface and a memory connected to the CPU respectively.

Another objective of the present invention is that the hinge has multiple first connecting pads formed thereon to correspond to the communication interface of the two display device.

Another objective of the present invention is that the communication interface include a HDMI interface, a SPI interface, a USB interface, a WiFi interface, a LAN interface, a Bluetooth interface and a NFC interface.

Another objective of the present invention is that the communication interface has multiple connecting pads to correspond to the first connecting pads of the hinge to allow the hinge to electrically connect to the communication interface.

### DESCRIPTION OF THE DRAWINGS

FIG. 1 is a schematic structural view of a combination of a tablet PC and an eBook; and
FIG. 2 is a schematic structural view of a spindle used to combine the tablet PC and the eBook.

### DETAILED DESCRIPTION OF PREFERRED EMBODIMENT OF THE INVENTION

With reference to Fig. 1, it is noted that an electronic display involving a tablet PC and an eBook is shown to have two display devices 1. The display device 1 may be a tablet PC or an eBook. Each display device 1 includes a central processing unit (CPU) 101, a display module 102, a display 103 connected to the CPU 101 via the display module 102, an I/O interface 104 connected to the CPU 101 and a memory 105. A hinge 2 having therein a connector module 21 is also provided between the two display devices 1. Each of the display device 1 is also provided with a communication interface 106 compatible with the connector module 21 such that the two display device 1 may detachably connected to one another via the hinge 2 and the connector module 21 is able to communicate with the communication interface 106. With the provision of this hinge 2, the two display devices 1 maybe readily combined.

The communication interface 106 may include a HDMI interface, a SPI interface, a USB interface, a WiFi interface, a LAN interface, a Bluetooth interface and a NFC interface. From the content of the communication interface 106, the two display devices 1 may then be connected to one another physically or wirelessly and the information stored inside the memory 108 may also be exchanged as requested.

With reference to Fig. 2, it is to be noted that the hinge 2 has multiple first connecting pads 22 provided on two opposite sides of the hinge 2 to correspond to second connecting pads 122 formed on a side of each of the communication interface 106 of each of the display devices 1. Also, an internet connector 108 is provided to communicate with the CPU 101 and physically or wirelessly connected to a cloud server outside the display device 1 or a router inside the display device 1 to again communicate with a server outside the display device 1. With the provision of the internet connector 108, users may then easily and readily acquire any available and useful information, which enhances the fun while reading.

A VOIP module 109, a camera 110 and an internet phone module 111, which are all connected to the CPU 101, enhance the applied diversity of the electronic display of the preferred embodiment of the present invention.

It is to be noted that the one display device 1 is an eBook whose display 103 is an e-paper or LCD screen and another display device 1 is a tablet computer whose display 103 is a LCD screen. E-paper uses an EPD display. Therefore, with the provision of EPD display and LCD screen, when the user is reading an article from the EPD display, the LCD screen is able to present colorful related drawings or other related information so that the user is able to simultaneously receives information from different angles, which really enhances the fun of reading. Furthermore, when the information is input to the electronic display of the preferred embodiment of the present invention, with the help of software, one of the display devices 1, i.e., the one with the LCD screen, is able to present the related article or drawing(s) by using technique well known in the art. A touch screen 107 is provided to a surface of the display 103 of each of the display devices 1 and connected to a corresponding one of the CPUs 101, which greatly increases the convenience of using the electronic device.

It is to be noted that by way of physical or wireless connection as well as communication protocol, an eBook and a tablet computer is able to be combined as one electronic gadget having two screens.

The method combining a tablet computer and an eBook includes the following steps:
providing a communication interface on a side of the tablet computer and the eBook; and
providing a hinge with first connecting pads configured to correspond to the communication interfaces of the tablet computer and the eBook to allow the tablet computer and the eBook to be detachably connected.

Although the invention has been described in connection with the embodiments shown in the accompanying drawings, a person having ordinary skill in the art may easily make various modifications to the invention based on the above descriptions. Therefore, some details of the embodiment should not be construed to restrict the invention. The scope of the invention is limited by the accompanying claims.

## Claims

1. An electronic display including:
two display devices respectively having therein a CPU, a display module, a display connected to the CPU via the display module, an I/O interface and a memory connected to the CPU respectively;
a hinge provided between the two display device and having therein a connector module; and
a communication interface adapted to be formed on the two display devices to correspond and detachably connect to the connector module of the hinge such that the two display devices are communicated to one another.

2. The electronic display as claimed in claim 1, wherein the CPU is connected to the connector module via the communication interface.

3. The electronic display as claimed in claim 2, wherein the hinge has multiple first connecting pads formed thereon to correspond to the communication interface of the two display device.

4. The electronic display as claimed in claim 2, wherein the communication interface include a HDMI interface, a SPI interface, a USB interface, a WiFi interface, a LAN interface, a Bluetooth interface and a NFC interface.

5. The electronic display as claimed in claim 3, wherein one of the display devices adopts an eBook with an e-paper or a liquid crystal display, the other display device adopts a tablet computer with a liquid crystal display.

6. The electronic display as claimed in claim 5 further comprising a touch screen connected to the CPU.

7. The electronic display as claimed in claim 6, wherein a VOIP is provided to both of the display devices to connect to respect CPU of the two display devices.

8. The electronic display as claimed in claim 7 further comprising a camera connected to the CPU of each of the two display devices.

9. The electronic display as claimed in claim 8, wherein the communication interface has multiple connecting pads to correspond to the first connecting pads of the hinge to allow the hinge to electrically connect to the communication interface.

10. A method of combining an eBook and a tablet computer, the method comprising the steps of:
providing a communication interface on a side of the tablet computer and the eBook; and
providing a hinge with first connecting pads configured to correspond to the communication interfaces of the tablet computer and the eBook to allow the tablet computer and the eBook to be detachably connected.
